# EUROPEAN PATENT APPLICATION

(11) **EP 1 705 164 A1**
(43) Date of publication of application: **27.09.2006**
(21) Application number: 05425177.2
(22) Date of filing: 25.03.2005
(51) Int. Cl.: C04B 14/22, E04F 15/024, C04B 28/02

(54) **A panel particularly for use in platform floors and process for the preparation of said panel**

(71) Applicant: I.C.R.S. Industrial Ceramic Reinforcement Solution S.r.L., 20122 Milano (IT)
(72) Inventor: Giuliani, Giacinto, Dr., 16035 Rapallo (Genova) (IT)
(74) Representative: Lunati, Vittoriano

(57) **Abstract**

This is a panel (1) including at least one load-bearing layer (2), essentially composed of concrete (10), having among its components at least cement (11), aggregate material (12), and water (13); said aggregate material (12) being at least partially composed of alkali-resistant glass grit (14) with dimensions coming between 0.01 mm and 2.6 mm. Moreover, the concrete (10) preferably includes a micro-reinforcement composed of high tensile strength fibers (15) and preferably made of AR glass fibers (15b) and polypropylene fibers (15a). The panel 1 also includes a grid 3 of alkali-resistant glass fibers. A process is also described for the manufacture of said panel (1), that involves a first stage (20a) for pouring a portion of concrete (10) into a form (7), then inserting a grid (3), followed by a stage for vibrating (22) the form (7) and then pouring (20b) the remainder of the concrete (10) into the form (7).

## Description

This invention relates to a panel particularly for use in platform floors and a process for manufacturing said panel, of the type described in the preamble of the independent claims.

The panel forms the upper, covering layer of a platform floor, or "floating" floor, which leaves a space underneath for the passage of wiring and various services.

It is common knowledge that platform floors are widely used in offices, for instance, shopping centers, EDP centers, industrial power plants, banks, hospitals, laboratories, and generally in all cases where numerous cables and ducts need to transit to serve electric, electronic, voice and data transfer and communication systems, and also hydraulic, pneumatic, gas distribution systems, etc.

On the whole, platform floors include uprights or pillars of adjustable height, which are anchored directly to the unfinished floor. The top ends of the pillars support cross members that in turn support the top panels, arranged so as to produce a continuous flat surface.

There is consequently a cavity between the top panels and the unfinished floor, through which the aforesaid service lines can transit.

The advantage of this type of floor is not only that it enables a precise and effective sorting of the various service systems to the single user points and the passage of a large number of cables and ducts without interfering with the transit of persons and vehicles, but also that it allows for these systems to be adapted rapidly to meet new requirements.

In fact, in order to rehabilitate a given room, in terms of the services available, all you have to do is lift the top panels and re-arrange the service lines situated in the space between the unfinished floor and the top panels.

Platform floors also have the advantage of enabling the top layer to be replaced quickly and easily, e.g. to change its physical features, strength or color.

Alongside the above-mentioned advantages, the prior art as outlined above has several important drawbacks.

In fact, to create a cavity under the floor and ensure the opportunity to lift and reposition the panels in the event of needing to make changes or meet new needs means that platform floors must have certain functional characteristics that are technically demanding and costly, considerably more so than in the case of normal flooring panels or tiles, which are placed directly and entirely on the unfinished floor surface.

In fact, platform floor panels are placed on a number of individual supporting elements and must consequently be capable of withstanding even considerable bending stresses. For instance, it may be that a piece of furniture or a piece of equipment stands mainly on only a portion of a single panel without any support directly underneath.

It is also essential for these panels to withstand the shocks that can be induced by various events, accidental or otherwise, and that is why it is important for these panels not to simply fall apart when they reach their ultimate strength (under the effect of an impact or other loads), they may crack, but must still remain in one piece.

Flooring panels must also have a wear course on the top, for the passage of pedestrians, trolleys or machinery, with a certain surface finish.

It is also necessary for such panels to be of limited weight, so that they are easy to lift and handle.

Moreover, it is of fundamental importance for the panels described to be flame resistant, particularly if they are installed in workshops or the like.

In order to meet all these needs, platform floors have structures defined by several elements fanctionally cooperating together.

For instance, it is common to see a panel structure based on a preliminary arrangement of substantially three layers.

The first layer is the top layer, which remains in view, made using good-quality and/or aesthetically attractive materials, or prepared to suit the environment in which it is to be used, e.g. ceramic tiles, or acid-proof resins in chemical laboratories, or rubber for slip-proof requirements, etc.

The second layer is the one that gives the panels its thickness and is generally a relatively inexpensive material, such as wood, chipboard, wood and resin conglomerates, cement filler, or calcium sulfate CaSO₄ (plaster) with embedded reinforcing elements, etc.

The third layer forms the underside of the panel and is generally made of metal, e.g. aluminium or steel.

This consequently gives the panel the necessary lead-bearing capacity and also provides a smooth and flat surface on the underside.

This makes the panel a complex, heavy and costly structure, however.

In addition, such panels may reveal various deformities due, for instance, to the different strain coefficients between the metals and the composite materials on top of them.

There are also concrete panels that pose no problems of thermal deformation, but they are too thick or too heavy to withstand the bending loads and they also pose problems of crumbling rupture.

The known panels also pose problems in terms of flame resistance.

In fact, a rise in the temperature inside the panel causes the water existing in the materials, and in the cement-based materials in particular, in the form of humidity to dilate, which can ultimately make the panel explode. This situation is further aggravated by the plasticizing admixtures added to the cement-based materials, which are frequently composed of hydrocarbons and consequently offer an inadequate flame resistance.

In this setting, the technical aim behind the present invention is to conceive a panel, and a process for its manufacture, capable of substantially overcoming the above-described drawbacks.

In the context of said technical aim, an important object of the invention is to conceive a panel with a great mechanical strength, a straightforward structure and a low cost.

Another object of the invention is to conceive a floor covering panel that is of limited thickness and weight, despite its excellent performance.

A further object is to produce a shock-resistant panel that does not crumble in the event of an excessively severe impact.

Yet another object of the invention is to produce a panel capable of withstanding high temperatures.

The technical aim and above-specified objects are achieved by a panel particularly for platform floors and by a process for manufacturing said panels as claimed in the independent claims.

Preferred embodiments are illustrated in the dependent claims.

Further characteristics and advantages of the invention are better explained below in the detailed description of a preferred embodiments of the invention, with reference to the attached drawings, wherein:

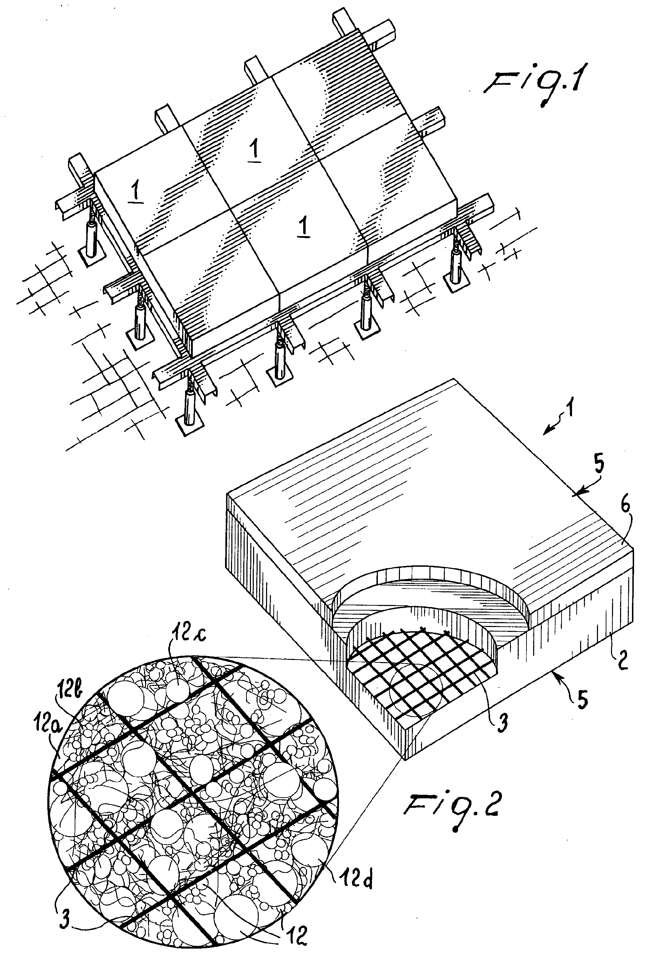

**Fig. 1** shows a floor obtained using the product according to the invention;
**Fig. 2** shows the product according to the invention in a partial cross-section with an enlargement of a portion of the product;
**Fig. 3** shows a stress-strain [kN-mm] diagram of a bending test on a sample of concrete containing no structural reinforcement;
**Fig. 4** shows a stress-strain [kN-mm] diagram of a bending test on a sample of concrete containing a polypropylene fiber reinforcement;
**Fig. 5** shows a stress-strain [kN-mm] diagram of a bending test on a sample of concrete containing an alkali-resistant glass fiber reinforcement;
**Fig. 6** shows a stress-strain [kN-mm] diagram of a bending test on a sample of concrete containing a composite polypropylene fibers and alkali-resistant glass fiber reinforcement; and
**Fig. 7** is a block diagram of the process according to the invention.
With reference to the above-mentioned figures, the panel according to the invention is globally indicated by the numeral **1.**

Briefly, the panel 1 comprises at least one load-bearing layer **2** made with a cement-based material **10** substantially composed of concrete, the components of which include at least cement **11,** aggregate material **12** and water **13.**

Said aggregate material 12 is generally at least partially composed of glass grit **14,** in the form of granules of alkali-resistant glass with dimensions coming between 0.01 mm and 2.6 mm.

To be more precise, said aggregate material 12 comprises a powdered aggregate **12a,** with dimensions of less than 0.5 mm in proportions of no less than 10% by weight of the total weight of the aggregates 12, and mainly comprising said glass grit 14.

Moreover, the concrete 10 preferably includes a micro-reinforcement composed of fibers **15** with a high tensile strength.

The load-bearing layer 2 also preferably includes a grid 3 made of steel or other material, such as polymer fibers or the like, that provides structural reinforcement for said layer.

In addition to the above-described load-bearing layer 2, the panel 1 preferably includes a top layer **6** that forms the visible surface of the panel 1 and consequently defines its appearance and surface features, as well as its functionality in relation to the room where it is installed.

This top layer 6 is made of any suitable, ceramic or non-ceramic material. For instance, the chosen material may be ceramic tiles, acid-proof resins, PVC, wood or environmentally-friendly coatings including titanium dioxide.

Preferably, the load-bearing layer 2 and top layer 6 give rise to a single product and are finished together. In particular as concerns the truing of the side edges. The following is a more detailed description of the various components of the panel 1 and of the concrete 10 that forms the load-bearing layer 2.

The concrete 10 is a cement-based material including aggregate material 12 that is composed of aggregates of different sizes, which can be distinguished as: a powdered aggregate 12a, a fine aggregate **12b** substantially composed of sand, with larger dimensions than the powdered aggregate 12a, and a coarse aggregate **12d** with dimensions larger than the fine aggregate 12b. There is preferably also some medium aggregate **12c** with dimensions smaller than the coarse aggregate 12d and larger than the fine aggregate 12b.

To be more precise, the powdered aggregate 12a has dimensions coming between 0.01 mm and 0.5 mm, so its dimensions are very similar to those of the particles in the cement 11. The particles in the cement 11 usually have a diameters coming between 0.01 mm and 0.20 mm.

This feature, i.e. the presence of the powdered aggregate 12a, makes the aggregates come closer to the dimensions of the cement. This reduces the amount of porosity in the concrete 10, and thereby improves its mechanical features, providing the powdered aggregate is added in sufficient quantities, i.e. more than 10% by weight of the total weight of the aggregates 12.

The dimensions of the other aggregates can vary: the fine aggregate has dimensions coming between 0.5 mm and 1 mm, the medium aggregate has dimensions coming between 1.3 mm and 2.8 mm, and the coarse aggregate has dimensions coming between 4 mm and 8 mm.

The weight to weight quantities of the different aggregates 12 can vary, but it is always advisable to use high proportions of powdered aggregate 12a.

For this purpose, said powdered aggregate 12a is added in weight to weight quantities similar to or greater than the quantity of the cement 11.

Preferably, the fine aggregate 12b is added in similar quantities by weight to the powdered aggregate 12a, while the coarse aggregate 12d is added in greater quantities by weight than that of the powdered aggregate 12a. Finally, the medium aggregate 12c is added in smaller quantities by weight than that of the powdered aggregate 12a.

As mentioned previously, the aggregates 12 with dimensions coming between 0.01 - 2.6 mm are at least partially composed of alkali-resistant (AR) glass grit 14. The glass grit 14 preferably accounts for the entire amount of the powdered aggregate 12a, and said grit 14 can also be used for the fine aggregate 12b and the medium aggregate 12c.

Said grit 14 is composed of alkali-resistant glass granules **14a** obtained by crushing pieces of alkali-resistant glass, a material that can also be obtained from processing waste and consequently at a very low cost.

The AR glass granules 14a are preferably composed of glass with a high zirconium oxide *ZrO*_{*2*} content, capable of withstanding alkaline substances.

They are consequently composed of a material with a very high mechanical strength and capable of resisting high temperatures.

The aggregate 12 composed of AR glass grit 14 have constant physical and mechanical properties, i.e. its properties do not vary from one granule to another. Unlike conventional aggregates composed of sand, gravel or the like, which are intrinsically non-homogeneous by nature, and this can have a negative effect on the strength of the concrete 10.

Moreover, the granules 14a have a very irregular and angular shape, due particularly to the brittle rupture mechanism they undergo during crushing, which is characteristic of vitreous materials.

This irregular and angular shape of the granules 14a enables them to bind more stably to the cement 11 with a consequently better performance of the cement. Thanks to the above-described features, the aggregate 12 composed of grit 14 enables a further reduction in the gaps and micro-porosities in the concrete, thus enabling an improvement in the mechanical characteristics and a corresponding increase in the density of the concrete 10.

Another feature of the grit 14 is that it has a considerable sliding capacity and it consequently improves the plastic consistency of the cement 11 and of the resulting concrete 10.

This sliding capacity of the aggregate is due to the minimal surface roughness characterizing the aggregate, not to the macroscopic shape of the aggregate granules.

In this sense, some aggregate materials 12 may have an angular and irregular shape, suitable for binding with the cement 11, but nonetheless have smooth single surfaces, i.e. with a very limited surface roughness, which considerably adds to the sliding capacity of the aggregate 12 and consequently assures a greater plasticity of the concrete 10. This is true of the glass grit 14 in question. This is a feature that is always appreciated in the field of cement mixtures and is usually achieved by adding water 13 or specific plasticizing admixtures **16.**

In fact, though it improves the plastic consistency of the cement 11, adding water 13 is known to have a considerable negative effect on the mechanical strength of the concrete 10. Despite these drawbacks, water is usually added in abundance to cement 11 and the ratio between the quantity of water 13 and the quantity of cement 11 in the concrete 10 (water/cement ratio) can range from an optimal value of 0.3 to approximately 0.7, which roughly halves the mechanical strength of the concrete.

Plasticizing admixtures 16 do not have the disadvantages of water 13 and they give the cement 11 a considerably more plastic consistency, but they often pose problems from the point of view of flame resistance.

In fact, said plasticizing admixtures 16 are often made from hydrocarbons, which are known to be flammable and consequently to reduce the flame resistance of the concrete 10.

The grit 14 enables a considerable reduction in the amounts of water 13 and plasticizing admixtures 16 that have to be added to the cement 11, to obtain the same plasticity. Thanks to the grit 14, the same plasticity of the cement 11 can be preserved even completely omitting the plasticizing admixtures 16 and keeping a water/cement ratio very close to the ideal value.

Alternatively, again thanks to the use of the grit 14, smaller amounts of plasticizing admixtures 16 can be added and the water/cement ratio can be reduced even to below the ideal value, consequently giving the concrete 10 an extraordinary strength, which diminishes with increasing quantities of water 13.

The concrete 10 also preferably includes a micro-reinforcement composed of fibers 15 with a high tensile strength.

These fibers can be made of polypropylene **15a.**

Polypropylene fibers 15a are known in themselves, as is their inclusion in concrete. In fact, these fibers 15a increase the mechanical strength of the concrete 10, e.g. its bending strength.

Figures 4-8 show the stress-strain [kN-mm] diagrams for bending tests on samples of concrete using different types of reinforcement fiber 15.

Said diagrams emphasize that the bending strength of concrete without any reinforcement (Fig. 4) is increased when polypropylene fibers 15a (Fig. 5) are embedded therein.

In fact, they increase both the maximum applicable stresses and the bending load values that the concrete can withstand. The maximum stress rises from approximately 30 to 35 kN and the strain from approximately 0.3 millimeters to approximately 1 millimeter.

As also shown in Fig. 5, however, the stress-strain curve reveals a final descending stretch **A** that is substantially vertical.

This means that a concrete 10 containing polypropylene fibers 15a alone suffers abrupt failure when its maximum strength is exceeded.

A very different type of fiber can be obtained using alkali-resistant glass fibers **15b.** AR glass fibers 15b, like the grit 14 made of the same material, have excellent properties in terms of being insensitive to high temperatures, since they are capable of withstanding even direct exposure to temperatures of 650°C or more, without difficulty.

They consequently give the concrete 10 in which such fibers are embedded an excellent flame resistance and also fair mechanical properties.

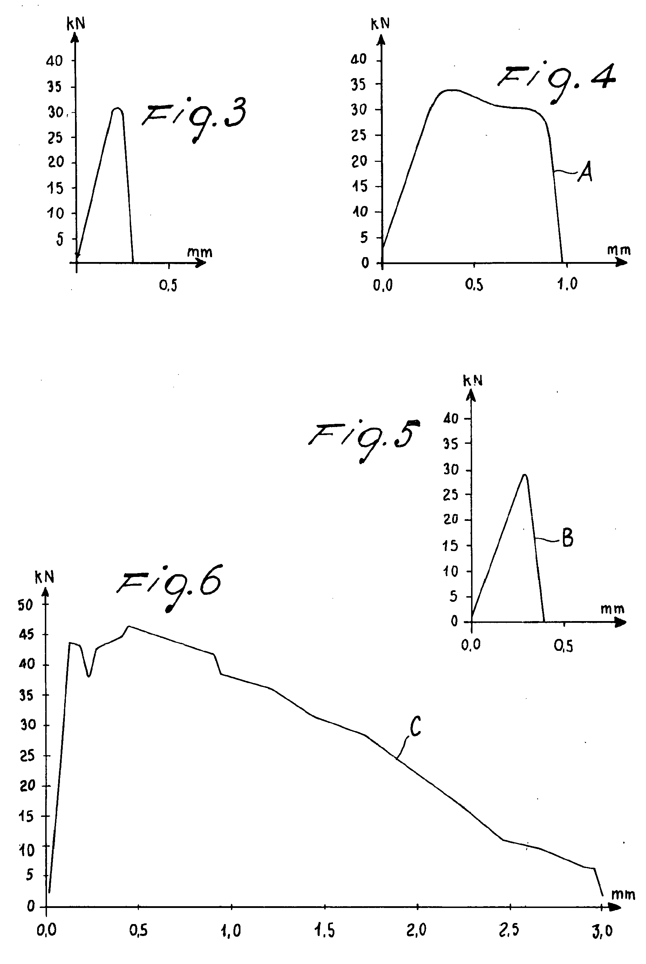

This fact is illustrated in Fig. 6, which shows the bending strength of a concrete 10 containing AR glass fibers 15b alone.

The applicable stresses are again around 30 kN, but the concrete acquires greater flexibility in relation both to strain under maximum load (which passes from the 0.2 millimeters of Fig. 4 to the 0.3 millimeters of Fig. 6) and to ultimate strain, which rises to approximately 0.35 millimeters.

Nonetheless, Fig. 6 again shows a stress-strain curve with an extremely steep, virtually vertical final descending stretch **B.**

This means that a concrete containing glass fibers 15b alone fails completely when the maximum load is exceeded.

The preferred embodiment of the panel 1 involves the combined use of both polypropylene fibers 15a and glass fibers 15b to create a fabric 15c that is evenly distributed in the concrete 10 and that adheres strongly to the concrete through the effect of bonding means **16,** advantageously added to the polypropylene fibers 15a and glass fibers 15b.

The bonding means 16 are in the form of a binder **16a,** and/or defined by the geometrical characteristics of the fibers 15.

The binder 16a is an aqueous solution containing a mixture of silane, non-reactive polyurethane emulsions and high-molecular-weight polyethylene.

The binder 16a promotes adhesion to the cement 11 and the aggregates 12 (bridging) and is applied preferably to the AR glass fibers 15b (though it may also be applied to polypropylene fibers 15a) during their manufacture.

In fact, the AR glass fibers 15b are advantageously made in the form of single filaments, collected into bunches that each contain more than a thousand filaments. Advantageously, to obtain the maximum strength, each bunch contains between 1200 and 2500 filaments.

The bunches of filaments are coated with the binder 16a, then cut and dried so that the binder polymerizes as the water content evaporates.

The bonding means 16 are additionally or alternatively achieved as a result of the geometrical features of the polypropylene fibers 15a and glass fibers 15b having a non-circular cross-section so as to increase their surface area and thus also the area of contact for the equivalent volume of fibers.

Said cross-sections may be square, trapezoid, triangular or elliptic, flat or variously profiled.

Preferably, the polypropylene fibers 15a are shaped so that they can easily be manufactured by extrusion starting from a polymer.

In the currently preferred embodiment, polypropylene fibers 15a and glass fibers 15b are selected with substantially similar dimensions and in substantially similar quantities.

Preferably the polypropylene fibers 15a and glass fibers 15b are between 0.7 and 1 millimeter long.

The crosswise dimensions are generally between 25 um and 35 um. On the whole, the fibers 15 are added in quantities coming between 4% and 8% of the weight of the cement.

The fabric 15c containing the polypropylene fibers 15a and AR glass fibers 15b assures the concrete 10 excellent mechanical properties.

In fact, Fig. 6 illustrates the stress-strain [kN-mm] diagram obtained after bending a concrete sample 10 reinforced with the described fabric 15c.

Clearly, the curve reaches higher maximum stress values than those recorded in the concretes containing polypropylene fibers 15a (Fig. 4) or glass fibers 15b alone (Fig. 5), but above all the final stretches of the curves A and B no longer descend vertically.

The maximum stress applicable is in fact around 40 - 45 kN and there is a final stretch C that slopes down gradually, meaning that the strength of the material fails after gradual, ample bending, as illustrated in Fig. 6.

As a consequence, the concrete 10 containing said fabric 15c fails very gradually after reaching its ultimate load, thus ensuring considerable safety margins for the panels 1.

This outcome is thought to be due to a.natural, gradual distribution of the load between the polypropylene fibers 15a and the glass fibers 15b.

It may be that the more rigid or stronger or better bonded fibers - mainly the polypropylene fibers 15a - cooperate more in supporting the stresses applied in loading situations below the ultimate load.

Then, with loads beyond said level, the polypropylene fibers 15a that have already been severely loaded fail, and the glass fibers 15b take over. These fibers 15b are unable to prevent failure, but - because they are still substantially intact - they slow down the failure process considerably.

In practical terms, the presence of the above-described fabric 15c gives rise to a differentiated and selective effect of the various components of the fabric and a very gradual failure once they have exceeded their maximum strength.

A further positive effect of said fabric of fibers 15 is on the flame resistance of the concrete 10 incorporating said fibers.

In fact, the glass fibers 15b melt at temperatures of 650°C or more, while the polypropylene fibers 15a melt at approximately 200°C. According to the results of tests conducted by the applicant, as it melts the polypropylene seems to create tunnels that provide an escape route for the steam building up due to the humidity in the cement 11 contained in the panel 1.

By means of the above-described mechanism, when the panels 1 are submitted to high temperatures, they either explode very late or not at all.

The cement 11 contained in the concrete 10 is preferably a high-quality cement, suitably selected from among the cements in class 42.5 or 52.5.

The panel 1 also preferably and advantageously includes a reinforcement grid 3. Said grid 3, composed of steel, polymer fibers or other material with excellent mechanical characteristics, is incorporated in the panel 1 in a direction parallel to the major plane **5** of the panel 1.

The grid 3 in the plane 5 preferably has a shape similar to the shape of the panel 1 and covers a surface area slightly smaller than the area of the panel 1, thus providing a structural reinforcement for the whole panel 1 with a very limited additional weight.

Said grid 3 has a preferably and advantageously squared mesh **3a** and said mesh 3a has openings with dimensions greater than the maximum dimensions of said aggregate, i.e. dimensions greater than those of the coarse aggregate 12d.

This sizing of the mesh 3a enables any component of the aggregate 12 in the concrete 10 to fit between the holes. The grid 3 thus has the considerable advantage of not interrupting the continuity of the concrete 10 in the direction perpendicular to the plane 5, thus preserving the strength of the panel 1. In fact, a discontinuity in said plane could weaken the panel 1 in the direction perpendicular to the plane 5.

To prevent such a discontinuity, the panel 1 is also advantageously vibrated after the grid 3 has been embedded in the concrete 10, so that the aggregates can fit in between the mesh (3a).

As for the sizing of the grid 3 as described, the mesh 3a has openings whose dimensions come between 7 mm and 12 mm and a thickness of between 0.5 mm and 0.8 mm.

The grid 3 is placed centrally in the thickness of the panel 1, or in the lower half of the panel. In this latter case, the grid can act as an important reinforcement in the area where the panel 1 is under tensile stress.

In fact, the loads brought to bear on the panel 1, especially if it is used in platform floors, are translated into a bending stress on the panel that compresses the upper side of the panel and extends the lower part. Concrete is known to have a far lower resistance to tensile than to compressive stresses, and that is why it is advisable for the grid 3 to reinforce the lower part of the panel 1.

### EXAMPLE

The following is an example of the components needed for a panel 1.

Said panel 1 has a square surface area 400 mm x 400 mm, and is 21 mm in height.

One m³ of concrete 10 contains the components indicated in the table below.

| | DIMENSIONS [mm] | | WEIGHT [kg] | W/W CEMENT x 100 |
|---|---|---|---|---|
| | min | max | | |
| Powdered aggregate (12a) | 0.20 | 0.35 | 422.2 | 105.5% |
| Fine aggregate (12b) | 0.60 | 0.80 | 422.2 | 105.5% |
| Medium aggregate (12c) | 1.50 | 2.50 | 211.1 | 52.8% |
| Coarse aggregate (12d) | 4.00 | 6.00 | 863.6 | 215.9% |
| TOTAL AGGREGATES (12) | | | 1919.1 | 479.8% |
| CEMENT (11) | | | 400.0 | 100.0% |
| WATER (13) | | | 90.0 | 22.5% |
| ADMIXTURES (16) | | | 1.32 | 0.3% |
| FIBER FABRIC (15c) | | | 24.0 | 6.0% |
| TOTAL | | | 2432.41 | 608.1% |

In this concrete 10, the powdered aggregate 12a is composed entirely of glass grit 14.

Said concrete consequently has a density of 2.43 kg/dm³, which makes the panel 1 weigh just over 18 kg, so it is perfectly manageable by hand.

Moreover, said concrete 10 has a particularly low water/cement ratio, even lower than the theoretically ideal 0.3, amounting to 0.225.

A reinforcement grid 3 is added to said panel with a 10 mm square mesh 3a.

The invention includes a process for the preparation of panels 1 for use in platform floors including at least one load-bearing layer made of concrete as described above.

Said process includes a stage 20 for pouring the concrete 10 into a form 7. Said concrete pouring stage is divided into two sub-stages 20a and 20b for pouring two complementary portions of the total quantity of concrete 10 needed, and in the interval between said sub-stages **20a** and **20b** an alkali-resistant glass grid 3 as described above is added.

The complete process involves a preliminary crushing **21** of the aggregates 12 in a disk crusher of known type, followed by the grading and weighing of said aggregates 12.

Like the aggregates, the glass fibers 15b and polypropylene fibers 15a are also graded and weighed, and said fibers 15 are then mixed together to create the fabric 15c.

Then the necessary quantities of water 13 and cement 11, plus any admixtures 16 are prepared.

The previously-described aggregate 12, cement 11, water 13 and fibers 15 are placed in the same container to prepare the concrete 10.

In the first pouring sub-stage 20a, the form 7 is partially filled with the concrete 10, preferably to half the volume of the form.

Then the grid 3 is added and the form 7 is vibrated to enable the aggregates 12 to penetrate between the holes 3a in the grid 3, so that said grid cannot give rise to a discontinuity in the material 10 forming the panel 1.

The vibration stage **22** preferably lasts for 10-15 seconds.

The vibrations make the grid 3 sink into the concrete 10 and thus act as a reinforcement for the lower part of the panel 1.

The pouring stage 20 is then completed with the addition 20b of the second half of the concrete 10.

The panel 1 is then preferably compressed by means of presses or the like, to ensure a better compacting of the concrete 10 and consequently better mechanical characteristics for the panel.

At the same time as said compression, the form 7 is also further vibrated.

This process eliminates any excess water 13. To facilitate said process, the compression and vibration of the panel 1 can be accompanied by the aspiration of the excess water 13.

This is followed by a stage for gluing **23** the top layer 6 onto the load-bearing layer 2.

Then comes a final stage for truing **24** the panel 1, when the top layer 6 and the load-bearing layer 2 are treated together.

The invention offers various important advantages, some of them relate to the individual components and have already been listed in the description, while the advantages of the finished panel 1 and deriving from the combination of the above-described components are outlined below.

The panel 1 has a considerable mechanical strength but a relatively limited weight. Various components concur towards the achievement of this result. First of all, there is the glass grit 14, which has a great and homogeneous hardness, and which particularly enables a marked reduction in the water content in the cement without interfering with its plasticity. As mentioned earlier, the water/cement ratio can be kept even below the level considered ideal. The concrete 10 also has very few porosities and gaps, which further improves its mechanical properties. This is thanks both to the grit 14, which is composed of angular particles that adhere better to the cement 11, and to the sizing and weight of the aggregate materials 12, which improve their bonding to the particles in the cement 11, and a better compacting of the aggregate 12 because the finest aggregates 12 can fit into the cavities in between the coarser aggregate 12.

The addition of the above-described fabric 15c considerably further improves the mechanical characteristics of the load-bearing layer 2, as observable in Figs. 3-6. Moreover, the grid 3, especially when the mesh 3a has dimensions greater than those of the aggregates 12 and a stage 22 is included to vibrate the form 7, so as to embed the grid 3 in the mixture, further reinforces the panel 1, without introducing any discontinuity in the panel in the direction perpendicular to the major plane 4 and without adding to the weight of the structure.

The panel 1 also has a greater flame resistance.

In fact, as explained previously, the polypropylene fibers 15a melt at low temperatures, creating channels that enable the steam developing from the humidity in the cement 11 contained in the panel 1 to escape.

Any explosion of the panel caused by the steam can consequently be prevented or considerably delayed.

Yet another advantage that the panels 1 offer is an excellent behavior at failure.

In fact, when panels made using the known technique are submitted to excessive loads, they fail by suddenly crumbling. This failure mechanism has numerous drawbacks, the first of which is the risk of damage to the underlying service piping when the panels are used in platform floors.

The panels 1 have a distinctly better and more gradual mechanism of failure.

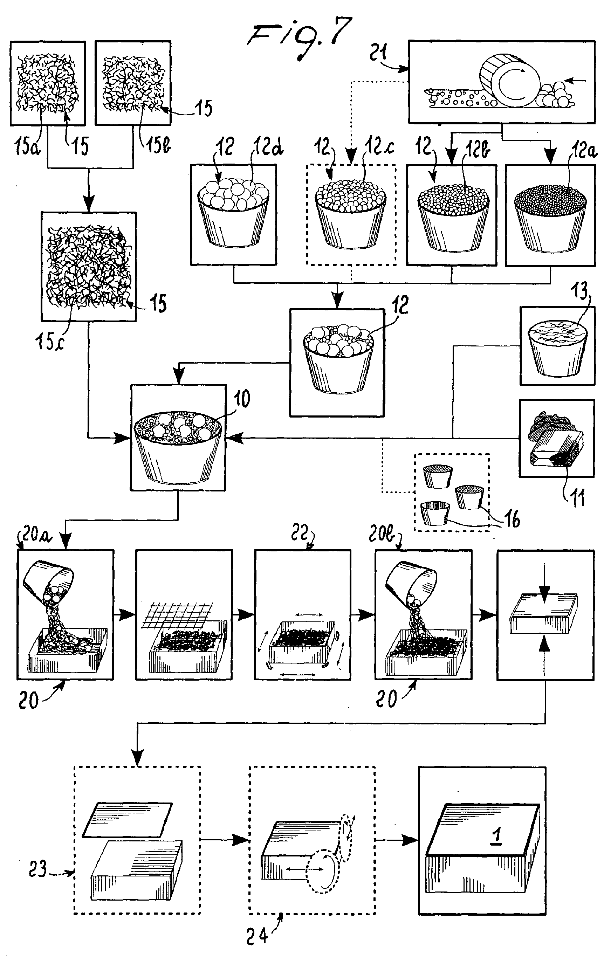

In fact, Fig. 7 shows how the inclusion of the fabric of fibers 15c improves the failure behavior of the concrete 10.

Secondly, the grid 3 keeps the parts of the panel 1 together even when it fails under excessive loads. In fact, the grid 3 is flexible and, instead of breaking together with the panel 1, it adapts to the shape of the latter.

## Claims

1. Panel, particularly for use in platform floors, comprising at least one layer (2) of cement-based material (10) having among its components at least cement (11), aggregate material (12) and water (13),
- **characterized in that** said aggregate material (12) includes a powdered aggregate (12a) with maximum dimensions smaller than 0.5 mm in quantities greater than 10% of said aggregate material (12), and **in that** said powdered aggregate is at least mainly composed of glass grit (14) comprising granules of alkali-resistant glass.

2. Panel as in claim 1, wherein said powdered aggregate (12a) is entirely composed of said glass grit (14).

3. Panel as in claim 1, wherein said powdered aggregate (12a) is added in much the same weight to weight quantities as said cement (11).

4. Panel as in claim 1, wherein said aggregate material (12) also includes fine aggregate (12b) in dimensions coming between 0.5 mm and 1 mm, and wherein said fine aggregate (12b) is at least partially composed of said glass grit (14).

5. Panel as in claim 1, wherein said aggregate material (12) also includes fine aggregate (12b), with dimensions greater than said powdered aggregate (12a) added in quantities by weight similar to the those of said powdered aggregate (12a), and medium aggregate (12c) with dimensions greater than said fine aggregate (12a) added in smaller quantities by weight than said powdered aggregate (12a), and coarse aggregate (12d) with dimensions greater than said medium aggregate (12c) added in greater quantities by weight than said powdered aggregate (12a).

6. Panel as in claim 5, wherein said fine aggregate (12b) has dimensions coming between 0.5 mm and 1 mm, said medium aggregate (12c) has dimensions coming between 1.3 mm and 2.8 mm, and said coarse aggregate (12d) has dimensions coming between 4 mm and 8 mm.

7. Panel as in claim 1, with a major plane (5) and including a reinforcement grid (3) that extends substantially on a plane parallel to said major plane (5).

8. Panel as in claim 7, wherein said grid (3) has a mesh (3a) and the openings in said mesh (3a) have dimensions larger than the maximum dimensions of said aggregate material (12a).

9. Panel as in claim 7, wherein said mesh (3a) has said minimum dimensions coming between 7 mm and 12 mm.

10. Panel as in claim 7, wherein said grid (3) is substantially situated in the lower half of the thickness of said panel (1).

11. Panel as in claim 1, with a major plane (5) and including a reinforcement grid (3) that extends substantially on a plane parallel to said major plane (5), and wherein said cement-based material (10) includes a micro-reinforcement of tensile stress resistant fibers (15).

12. Panel as in claim 1, wherein said cement-based material (10) includes a micro-reinforcement of tensile stress resistant fibers (15), and wherein said micro-reinforcement is a fabric (15c) containing alkali-resistant glass fibers (15b) and polypropylene fibers (15a).

13. Panel as in claim 12, wherein said fabric (15c) is added in a quantity by weight coming between 4% and 8% of the quantity by weight of said cement.

14. Process for the preparation of a panel particularly for use in platform floors, including at least one layer (2) of cement-based material (10) having among its components at least cement (11), aggregate material (12), and water (13), said process including a stage (20) for pouring said cement-based material (10) into a form (7), and **characterized in that** said stage (20) for pouring said cement-based material (10) is divided into two sub-stages (20a) and (20b) for pouring two complementary portions of the cement-based material (10) into the form, and **in that**, during the interval between said pouring sub-stages (20a) and (20b), there is a stage for placing a reinforcement grid (3) with a mesh (3a) whose dimensions are greater than the dimensions of said aggregate material (12) inside said form (7).

15. Process as in claim 14, including a subsequent stage (22) for vibrating said form (7) after inserting said grid (3).

16. Process as in claim 15, wherein said vibrating stage (22) lasts between 10 and 15 seconds.

17. Process as in claim 14, wherein said aggregate material is at least partially composed of alkali-resistant glass grit-(14) obtained by crushing (21) pieces of alkali-resistant glass.

18. Process as in claim 15, including a compression stage associated with a further vibration and the aspiration of any excess water (13) after said pouring stage (20).
